# EUROPÄISCHE PATENTSCHRIFT

(11) **EP 2 864 145 B1**
(45) Veröffentlichungstag und Bekanntmachung des Hinweises auf die Patenterteilung: **25.10.2017**
(21) Anmeldenummer: 13711834.5
(22) Anmeldetag: 15.03.2013
(51) Int. Cl.: B60K 11/08, B60L 11/18, B60R 19/52, H01R 13/447, B62D 25/24, B62D 25/10

(54) **KÜHLERSCHUTZ FÜR EIN FAHRZEUG SOWIE FAHRZEUG MIT EINEM DERARTIGEN KÜHLERSCHUTZ**
RADIATOR GUARD FOR A VEHICLE AND VEHICLE HAVING SUCH A RADIATOR GUARD
CACHE-RADIATEUR POUR VÉHICULE AINSI QUE VÉHICULE DOTÉ D'UN TEL CACHE-RADIATEUR

(30) Priorität: 23.06.2012 DE 102012012658
(43) Veröffentlichungstag der Anmeldung: 29.04.2015
(73) Patentinhaber: Volkswagen Aktiengesellschaft, 38440 Wolfsburg (DE)
(72) Erfinder: PICKARTZ, Thomas, 38114 Braunschweig (DE); GRIMM, Hergen, 38165 Lehre (DE)
(86) Internationale Anmeldenummer: PCT/EP2013/000793
(87) Internationale Veröffentlichungsnummer: WO 2013/189560

(56) Entgegenhaltungen:
- WO-A1-2010/143040
- DE-A1- 19 833 465
- DE-A1-102010 026 268
- FR-A1- 2 852 564
- US-A- 5 919 048

## Beschreibung

Die Erfindung betrifft einen Kühlerschutz für ein Fahrzeug, insbesondere Kraftfahrzeug, nach dem Oberbegriff des Patentanspruchs 1 der Erfindung. Gemäß Patentanspruch 8 betrifft die Erfindung ferner ein Fahrzeug mit einem derartigen Kühlerschutz.
Ein Kühlerschutz, überwiegend in Form eines Kühlerschutzgitters ist üblicherweise am Frontend eines Fahrzeugs angeordnet und weist eine oder mehrere Horizontal- und/oder Vertikallamellen auf, die den Durchtritt eines Kühlluftstroms zu innerhalb des Motorraums angeordneten Aggregaten oder sonstiger Einrichtungen ermöglichen. Darüber hinaus stellt das Kühlerschutzgitter des Öfteren aufgrund seiner Anmutung bzw. der Qualität des Designs desselben einen für das Fahrzeug charakteristischen Bestandteil dar. Die prägende Wirkung des Kühlerschutzgitters kann dabei bereits soweit gehen, dass das jeweilige Fahrzeug bzw. der Fahrzeughersteller von den beteiligten Verkehrskreisen respektive Kunden bereits am Kühlerschutzgitter erkennbar ist. In der jüngeren Vergangenheit werden aufgrund des ständig knapper werdenden Angebotes an Kraftstoffen für den verbrennungsmotorischen Antrieb von Kraftfahrzeugen große Anstrengungen unternommen, alternative Antriebsarten zur Verfügung zu stellen. Zunehmend an Bedeutung gewinnt dabei der elektromotorische oder Hybridantrieb, wobei Antriebsenergie in Form elektrischer Energie mittels elektrischer Speicherelemente, wie Batterien bzw. Akkumulatoren, bereitgestellt wird. Für die Versorgung der Akkumulatoren mit elektrischer Energie sind bevorzugt externe Ladestationen vorgesehen, die ihrerseits mittels Ladekabel mit dem Akkumulator des Fahrzeugs verbindbar sind. Insoweit verfügt dabei das Fahrzeug über eine Ladesteckdose, welcher ein entsprechender Ladestecker der Ladestation zuordenbar ist. Die Ladesteckdose ist dabei beispielsweise ergonomisch günstig im Bereich des Frontends des Fahrzeugs angeordnet. Im Hinblick auf eine externe Versorgung der Batterie bzw. des Akkumulators mit elektrischem Strom ist bereits aus der DE 33 07 812 A1 eine Ladesteckdose bekannt, die unmittelbar hinter dem Kühlerschutzgitter des Fahrzeugs angeordnet ist. Der Zugang zur Ladesteckdose ist über eine Öffnung im Kühlerschutz, vorliegend im Kühlerschutzgitter ermöglicht, wobei besagte Öffnung mittels eines separaten, abnehmbaren Deckels verschließbar ist. Als nachteilig ist in diesem Fall festzustellen, dass ein etwaige vorhandener prägender Eindruck des herkömmlichen Kühlerschutzes, d. h. ohne besagte Öffnung samt Deckel, durch diese Ein- bzw. Anbauten zumindest gestört wird. Es besteht demnach das Bedürfnis, auch bei etwaige vorzunehmenden Funktionserweiterungen des Kühlerschutzes denselben in seiner prägenden Gestalt zu erhalten. So wird mit der JP 7122328 A eine Ladesteckdose beschrieben, die am Frontend eines Fahrzeugs angeordnet ist und durch ein zentral eines Kühlerschutzgitters angeordnetes Emblem abgedeckt ist. Das Emblem ist drehbar um einen definierten Drehpunkt gelagert und schwenkt von einer geschlossenen Position, in der es die Ladesteckdose abdeckt, in eine geöffnete Position, in der es den Zugang zur Ladesteckdose freigibt. Die Größe der hinter dem Emblem angeordneten Öffnung für den Zugang zur Ladesteckdose wird dabei durch das Emblem bestimmt und ist demgemäß sehr begrenzt. Die gattungsbildende DE 198 33 465 A1 beschreibt eine Scheibenreinigungsanlage, welche im Bereich des Kühlergrills einen Einfüllstutzen aufweist. Der Einfüllstutzen ist an einem Halteteil befestigt, welches Halteteil nach Art einer Schublade auf Führungen aus dem Kühlergrill herausfahrbar ist. Die WO 2010/143040 A1 beschreibt einen schwenkbar gelagerten Deckel, welcher fahrzeugfrontseitig eines Kraftfahrzeugs einen in einer Beschickungsöffnung angeordneten elektrischen Ladeanschluss des Kraftfahrzeugs verdeckt. Der Deckel weist eine Außenfläche und eine Innenfläche auf und ist derart schwenkgelagert, dass in der Offenstellung des Deckels dessen Innenfläche respektive Rückseite nach Fahrzeug-vorn weist. Die DE 10 2010 026 268 A1 beschreibt ein Fahrzeug mit einer Vorrichtung zur Erfassung einer Fahrzeugumgebung, die mindestens eine Kamera umfasst. Die Kamera ist derart in einer Kühlerverkleidung angeordnet, dass diese zwischen einer Ruheposition, in welcher sie nach innen in die Kühlerverkleidung eingefahren und nach außen hin mittels einer beweglichen respektive um eine Drehachse verdrehbaren Klappe verdeckt ist, und einer Betriebsposition, in welcher sie aus der Kühlerverkleidung zumindest in eine Ebene mit der Kühlerverkleidung ausgefahren und von außen sichtbar ist, bewegbar ist. Die US 5 919 048 A beschreibt ein Kraftfahrzeug mit einer elektrischen Motorblockheizung und einem elektrischen Anschluss, der innerhalb einer Öffnung des Kühlergrills des Kraftfahrzeugs angeordnet ist. Besagte Öffnung ist mittels eines nach oben schwenkbar gelagerten Emblems verdeckt. In der Offenstellung des Emblems weist dessen Innenfläche respektive Rückseite nach Fahrzeug-vorn.
Aufgabe der Erfindung ist es, einen zum Stand der Technik alternativen Kühlerschutz zu schaffen, welcher bei Beibehaltung der prägenden Wirkung desselben, d. h., ohne jegliche besagte prägende Wirkung störende zusätzliche Elemente, eine Erweiterung seiner Funktion, insbesondere bezüglich der Anordnung eines Aggregats oder/oder sonstigen Einrichtung motorraumseitig des Kühlerschutzes situativ den Zugang zu besagtem Aggregat und/oder zur sonstigen Einrichtung hin ermöglicht. Gemäß einem weiteren Aspekt der Erfindung soll ferner ein Fahrzeug mit einem derartigen Kühlerschutz geschaffen werden.

Ausgehend von einem Kühlerschutz für ein Fahrzeug, insbesondere Kraftfahrzeug, welcher am Frontend des Fahrzeugs angeordnet ist und ein oder mehrere im Motorraum des Fahrzeugs angeordnete Aggregate und/oder Einrichtungen abdeckt, wobei der Kühlerschutz mehrteilig ausgebildet ist und bei Vermeidung einer Öffnung im sichtbaren Bereich desselben zumindest ein Teil des Kühlerschutzes relativ zu dem/den anderen Teil/en durch Verschwenken verstellbar ausgebildet ist, wodurch der Zugang zu zumindest einem der besagten Aggregate und/oder Einrichtungen ermöglicht ist, wird die gestellte Aufgabe durch die Merkmale des Kennzeichens des Anspruchs 1 gelöst. Durch diese Maßnahme ist eine im Stand der Technik favorisierte Zugangsöffnung im mit etwaigen designbestimmenden Merkmalen behafteten Kühlerschutz, die obendrein noch mit einer Klappe verschließbar ist, vorteilhaft vermieden, da vorliegend der Kühlerschutz selbst bzw. ein Teil desselben verstellbar ausgebildet ist und den frontseitigen Zugang zu besagten Aggregaten und/oder Einrichtungen ermöglicht. D. h., die designbestimmenden Merkmale des Kühlerschutzes werden trotz Ermöglichung des frontseitigen Zugangs zu zumindest einem innerhalb des Motorraums angeordneten Aggregat und/oder zumindest einer Einrichtung in ihrer Wirkung nicht nachteilig beeinträchtigt.
Eine zweckmäßige Ausführungsform des Kühlerschutzes ergibt sich dadurch, dass derselbe ein Träger-Teil aufweist, welches zumindest ein ortsfest am Träger-Teil angeordnetes erstes Abdeck-Teil und zumindest ein relativ zu demselben verstellbares zweites Abdeck-Teil trägt. Gemäß einer möglichen Abwandlung der Erfindung weisen die Abdeck-Teile bei Bedarf in einer bestimmten vorgewählten Ausgestaltung und Anordnung eine oder mehrere Lamellen, insbesondere Horizontal- und/oder Vertikallamellen auf, wodurch der Durchgang eines Kühlluftstroms durch den Kühlerschutz im Form eines sogenannten Kühlerschutzgitters in den Motorraum hinein ermöglicht ist. In Abhängigkeit der zu verzeichnenden Anordnung der Aggregate und/oder Einrichtungen, zu denen Zugang ermöglicht werden soll, und/oder des gewählten Designs des Kühlerschutzes sind die Abdeck-Teile in Fahrzeugquerrichtung (Y-Richtung) gesehen hintereinander oder in Fahrzeughochrichtung (Z-Richtung) gesehen übereinander angeordnet. Wie die Erfindung weiter vorsieht, bildet das zumindest eine verstellbare zweite Abdeck-Teil in einer ersten Betriebsstellung (Normalstellung) mit dem zumindest einen ortsfest am Träger-Teil angeordneten ersten Abdeck-Teil eine fluchtende Sichtseite des Kühlerschutzes aus, wodurch der prägende Eindruck des Kühlerschutzes besonders gut erhalten wird. In Weiterbildung der Erfindung ist ferner vorgesehen, dass das zumindest eine verstellbare zweite Abdeck-Teil wenigstens anteilmäßig eine Trennfuge zu einem oder mehreren benachbarten Bauteilen des Fahrzeugs ausbildet. Dies hat den Vorteil der besonders wirkungsvollen Kaschierung der Mehrteiligkeit des Kühlerschutzes. Besonders vorteilhaft ist das zumindest eine verstellbare zweite Abdeck-Teil in einem Bereich des Kühlerschutzes angeordnet, der eine motorraumseitig angeordnete Medienanschlusseinrichtung, insbesondere eine Ladesteckdose für die Speisung eines elektrischen Speichers, wie eines Akkumulators, mit elektrischem Strom, abdeckt. Durch diese Maßnahme ist ein komfortabler frontseitiger Zugang zu besagter Medienanschlusseinrichtung, insbesondere Ladesteckdose, ermöglicht.

Die Erfindung betrifft auch ein Fahrzeug, insbesondere Kraftfahrzeug, mit einem Kühlerschutz der vorstehend beschriebenen Art.

Nachstehend wird die Erfindung anhand der in der Zeichnung schematisch dargestellten Ausführungsbeispiele näher erläutert. Es zeigen:
- Fig. 1: die Vorderansicht des Frontends eines mit einem Kühlerschutz ausgestatteten Fahrzeugs gemäß einer ersten Ausgestaltungsform,
- Fig. 2: besagtes Frontend mit einem Kühlerschutz gemäß einer weiteren Ausgestaltungsform,
- Fig. 3: eine erste Ausführungsvariante des Kühlerschutzes nach Fig. 2 mit einem verstellbaren Abdeck-Teil in einer Offenstellung desselben,
- Fig. 4: die perspektivische Ansicht eines rahmenförmigen Träger-Teils des Kühlerschutzes nach Fig. 2 in Alleinstellung,
- Fig. 5: ein ortsfest am der besseren Übersichtlichkeit nicht näher dargestellten rahmenförmigen Träger-Teil befestigbares erstes Abdeck-Teil sowie ein verstellbares Abdeck-Teil, welches seinerseits sowohl in einer Normalstellung bzw. Geschlossenstellung (durchgehende Linienführung) als auch in einer Offenstellung (gestrichelte Linienführung) gezeigt ist,
- Fig. 6: die Einzelheit "Z" nach Fig. 5 (perspektivische Seitenansicht),
- Fig. 7: die Seitenansicht einer zweiten Ausführungsvariante des Kühlerschutzes nach Fig. 2 mit einem erfindungsgemäß verstellbaren Abdeck-Teil in einer Geschlossenstellung desselben,
- Fig. 8: die Draufsicht des Kühlerschutzes nach Fig. 7 mit offenem Abdeck-Teil,
- Fig. 9: die Seitenansicht des Kühlerschutzes nach Fig. 8, und
- Fig. 10: das Frontend des Fahrzeugs im Längsschnitt mit geöffnetem Abdeck-Teil und einer Ladesteckdose, an welcher ein Ladestecker angeschlossen ist.

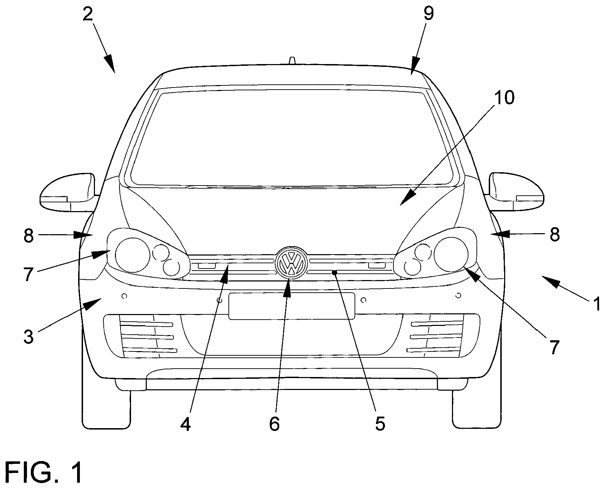

Fig. 1 zeigt zunächst das Frontend 1 eines Fahrzeugs 2, vorliegend Personenkraftwagens, mit einem Stoßfänger 3, mit einem Kühlerschutz 4 in Form eines mit Lamellen 5, vorliegend mit Horizontal-Lamellen sowie einem Emblem 6 ausgestatteten Kühlerschutzgitters, mit seitlich des Kühlerschutzes 4 angeordneten Scheinwerfern 7, mit vorderen Kotflügeln 8, die fahrzeugheckseitig an die Fahrgastzelle 9 des Fahrzeugs 1 anschließen und mit einem Frontdeckel 10. Besagtes Kühlerschutzgitter ermöglicht den Durchgang eines Kühlluftstroms in einen vom Frontdeckel 10 nach oben verschlossenen Hohlraum, z. B. den Motorraum des Fahrzeugs 2, in welchem beispielsweise als Antriebs-Aggregate eine nicht näher dargestellte Verbrennungskraftmaschine sowie Elektromaschine eines Hybridantriebs des Fahrzeugs 2 angeordnet sind.

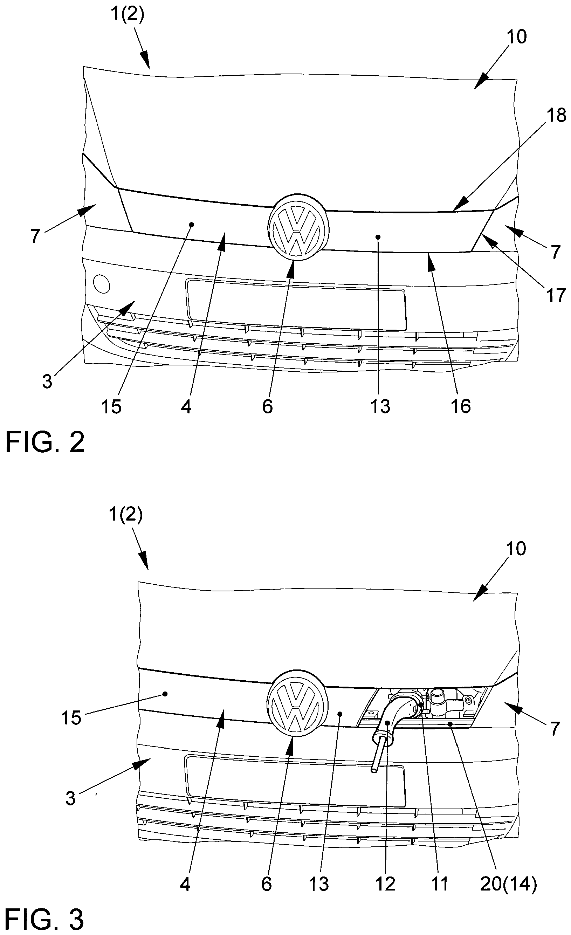

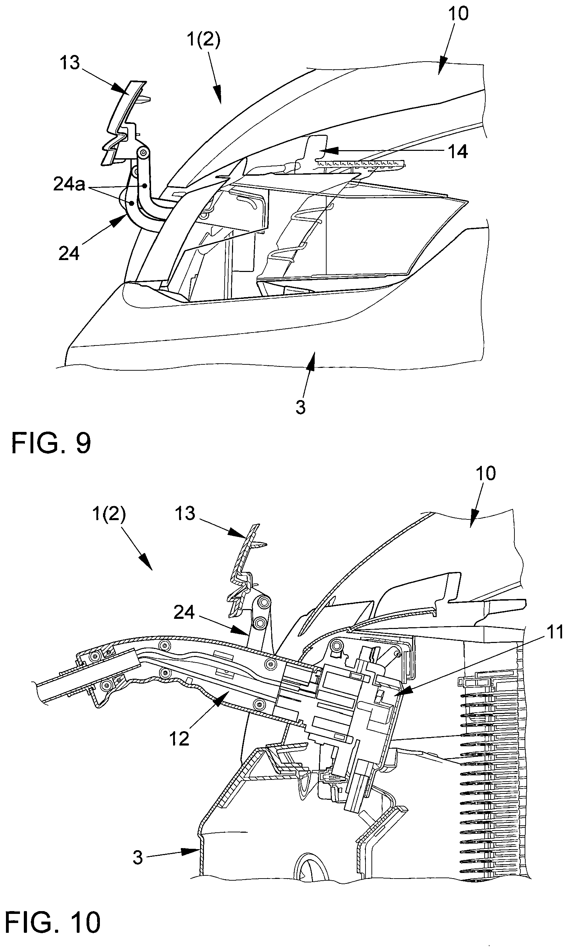

Der Kühlerschutz 4 respektive das Kühlerschutzgitter verdeckt demgemäß frontseitig des Fahrzeugs 2 besagten Hohlraum / Motorraum sowie die motorraumseitig des Kühlerschutzgitters angeordneten Aggregate und/oder sonstigen Einrichtungen, beispielsweise auch eine Medienanschlusseinrichtung in Form einer Ladesteckdose 11 zur Speisung eines nicht zeichnerisch dargestellten elektrischen Speichers, wie eines Akkumulators, mit elektrischem Strom. An besagte Ladesteckdose 11 ist ein Ladestecker 12 angeschlossen bzw. anschließbar, der seinerseits elektrisch mit einer nicht zeichnerisch dargestellten vorzugsweise externen Ladestation verbunden ist (vgl. Fig. 3 und 10).

Handelt es sich bei dem Fahrzeug 2 um ein ausschließlich elektrisch betriebenes Fahrzeug 2, kann wie in Fig. 2 gezeigt gegebenenfalls ein Kühlluftdurchgang durch den Kühlerschutz 4 und können demgemäß besagte Lamellen 5 entbehrlich sein.

Wie den Zeichnungsfiguren weiter zu entnehmen ist, ist der Kühlerschutz 4 mehrteilig ausgebildet und zwar derart, dass bei Vermeidung einer nach dem Stand der Technik (DE 33 07 812 A1) favorisierten Öffnung im sichtbaren Bereich des Kühlerschutzes 4 zumindest ein Teil 13 des Kühlerschutzes 4 relativ zu anderen Teilen 14, 15 desselben verstellbar ausgebildet ist, wodurch der Zugang zu einem der besagten Aggregate und/oder Einrichtungen, vorliegend insbesondere zur Ladesteckdose 11 ermöglicht ist.

### Variante 1 (welche nicht unter dem Gegenstand der Erfindung steht)

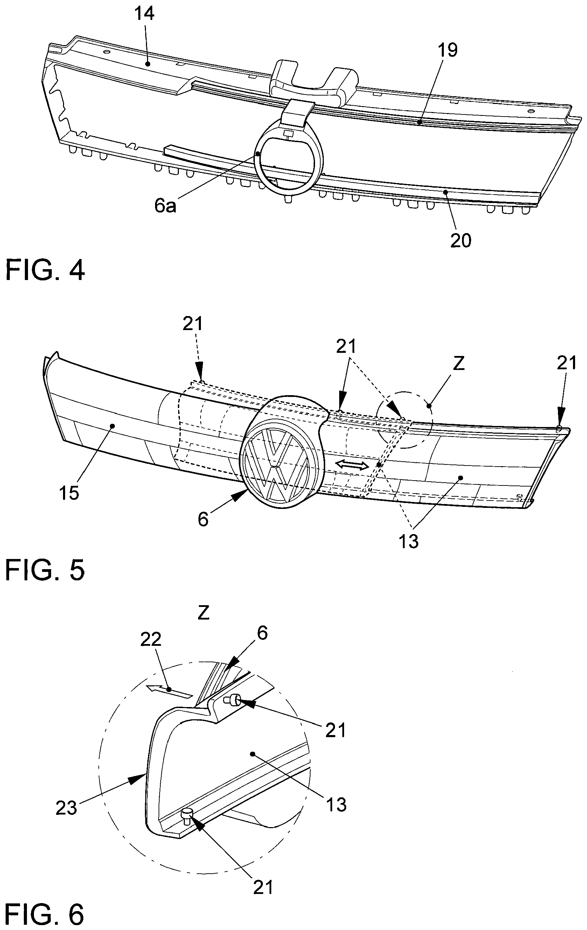

Gemäß Fig. 4 weist der Kühlerschutz 4 beispielgebend ein rahmenförmiges Träger-Teil 14 auf, welches am Stoßfänger 3 und/oder anderen benachbarten tragenden Bauteilen des Fahrzeugs 2 bzw. dessen Fahrzeugkarosserie befestigt oder befestigbar ist. Des Weiteren sind gemäß den Fig. 3 und 5 ein ortsfest am Träger-Teil 14 angeordnetes erstes Abdeck-Teil 15 und ein relativ zu demselben verstellbares zweites Abdeck-Teil 13 vorgesehen. Die Abdeck-Teile 13, 15 sind in Fahrzeugquerrichtung (Y-Richtung) gesehen hintereinander angeordnet und bilden im Bereich des mittig des Kühlerschutzes 4 angeordneten Emblems 6 mit Emblemhalter 6a eine nicht zeichnerisch dargestellte Trennfuge aus, wodurch dieselbe sehr gut kaschiert ist. Ferner bilden die Abdeck-Teile 13, 15 gleichzeitig die Trennfugen 16, 17, 18 zu den jeweils benachbarten Bauteilen, vorliegend zum Stoßfänger 3, zu den Scheinwerfern 7 und zum Frontdeckel 10 aus. Es ist somit ein vormontiertes oder vormontierbares Kühlerschutz-Modul ermöglicht, welches sich leicht und kostengünstig am Fahrzeug 2 anbringen lässt.

Die das Design des Kühlerschutzes 4 im Wesentlichen bestimmende Abdeckung des Kühlerschutzes 4 ist im Gegensatz zum Stand der Technik, bei dem lediglich eine Öffnung mit einem separaten Deckel in der designbestimmenden Abdeckung vorgesehen ist, somit vorliegend mittig des Kühlerschutzes 4 geteilt ausgebildet, wobei ein Abdeck-Teil 13 desselben verstellbar ausgebildet ist. Vorteilhaft ist somit bei vermiedener Designbeeinträchtigung ein großes Freigangsvolumen des Ladesteckers 12 realisiert (vgl. insbes. Fig. 3).

Das verstellbare zweite Abdeck-Teil 13 ist gemäß dieser Ausführungsvariante in Fahrzeugquerrichtung (Y-Richtung) zum ersten Abdeck-Teil 15 relativverschiebbar ausgebildet. Dazu verfügt das rahmenförmige Träger-Teil 14 über eine erste obere und eine zweite untere Führungsschiene 19, 20 in denen das zweite Abdeck-Teil 13 mittels Rollenführung 21 oder Gleitführung von einer ersten Betriebsstellung, welche der geschlossenen respektive Normalstellung entspricht, in eine zweite Betriebsstellung, die der Offenstellung entspricht, verschiebbar geführt ist (Fig. 3 bis 6).

Die Führungsschienen 19, 20 sind dabei derart am Träger-Teil 14 angeordnet, dass das zweite Abdeck-Teil 13 in der Normalstellung mit dem ortsfest am Träger-Teil 14 angeordneten ersten Abdeck-Teil 15 eine fluchtende Sichtseite des Kühlerschutzes 4, lediglich unterbrochen durch den Emblemhalter 6a samt Emblem 6, ausbildet. Die Führungsschienen 19, 20 verlaufen hinter dem Emblemhalter 6a samt Emblem 6, d.h. fahrzeugheckseitig derselben. Ferner verlaufen die Führungsschienen 19, 20 leicht schräg bis hinter das erste Abdeck-Teil 15, so dass das zweite Abdeck-Teil 13 sich im geöffneten Zustand bzw. im zweiten Betriebszustand zumindest teilweise in einer zur Ebene der ersten Betriebsstellung leicht schräg angeordneten Ebene befindet. Diese Führung ist insbesondere durch die leicht gekrümmte Kontur des zweiten Abdeck-Teils 13 erleichtert.

Das zweite Abdeck-Teil 13 kann mittels eines mechanisch, elektro-mechanisch, hydraulisch oder pneumatisch betriebenen Aktuators und beispielsweise mittels Fernbetätigung von der Fahrgastzelle 9 aus betätigt bzw. verstellt/verschoben werden (nicht zeichnerisch dargestellt). Vorliegend sind die Voraussetzungen für eine manuelle Betätigung des zweiten Abdeck-Teils 13 geschaffen, indem gemäß Fig. 6 am zweiten Abdeck-Teil 13 eine in Fahrtrichtung 22 des Fahrzeugs 2 abgestellte Rippe 23 ausgebildet ist, die eine manuelle Betätigung bzw. Verschiebung des zweites Abdeck-Teils 13 ermöglicht. Die Erfindung beschränkt sich jedoch nicht auf diese Lösung, sondern erfasst beispielsweise auch eine in das zweite Abdeck-Teil 13 eingelassenen Nut oder jedwedes andere an sich bekannte geeignete Mittel zur bestimmungsgemäßen manuellen Handhabung des zweiten Abdeck-Teils 13 (nicht zeichnerisch dargestellt).

### Variante 2 (Ausführungsbeispiel der Erfindung)

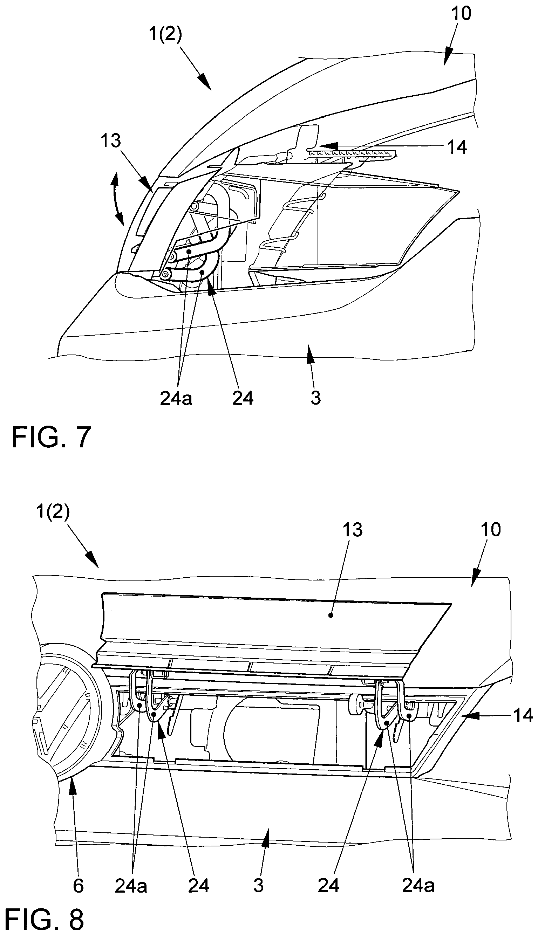

Eine Ausführungsvariante des erfindungsgemäßen Kühlerschutzes ist den Fig. 7 bis 10 zu entnehmen, wobei funktionsgleiche Teile mit gleichen Bezugszeichen wie zu der vorstehenden Ausführungsvariante bezeichnet sind, so dass abgesehen von den nachfolgend beschriebenen Unterschieden zu deren Erläuterung und Verständnis auch auf die obige Beschreibung verwiesen bzw. Bezug genommen wird. Danach unterscheidet sich diese Variante zur vorbeschriebenen im Wesentlichen dadurch, dass statt einer Schiebelösung zur Überführung des zweiten Abdeck-Teils 13 von der Normalstellung bzw. Geschlossenstellung (Fig. 7) in die Offenstellung (Fig. 8 bis 10) und zurück eine Klappenlösung gewählt ist.

Um auch hier ein großes Freigangsvolumen des Ladesteckers 12 zu realisieren (vgl. insbes. Fig. 10), ist das nunmehr klappenförmig ausgebildete zweite Abdeck-Teil 13 vorliegend mittels eines Viergelenkscharniers 24 mit gekrümmt ausgebildeten Gelenkarmen 24a am Träger-Teil 14 oder einem anderen geeigneten tragenden Bauteil des Fahrzeugs 2, wie beispielsweise an einem nicht näher dargestellten Montagerahmen, schwenkbar angelenkt. Das Viergelenkscharnier 24 ist derart ausgebildet, dass eine Parallelogrammführung des zweiten Abdeck-Teils 13 realisiert ist, die ihrerseits die Überführung desselben von einer Ebene, die der ersten Betriebsstellung bzw. Geschlossenstellung des zweiten Abdeck-Teils 13 entspricht, in eine zu derselben parallelen oder nahezu parallelen Ebene, die der zweiten Betriebsstellung bzw. Offenstellung des zweiten Abdeck-Teils 13 entspricht, ermöglicht. Vorteilhaft behält dabei die Sichtseite des zweiten Abdeck-Teils 13 im Wesentlichen ihre räumliche Orientierung zu einem Betrachter bei. Dies wirkt sich insbesondere dann vorteilhaft aus, wenn die Sichtseite des zweiten Abdeck-Teils 13 ein markantes bzw. prägendes Merkmal des Kühlerschutzes 4, wie beispielsweise eine bestimmte Kontur und/oder ein gegebenenfalls weiteres Emblem aufweist (nicht zeichnerisch dargestellt). Nicht-erfindungsgemäß sind auch andere Scharnierlösungen möglich, beispielsweise reine Schwenklösungen, bei der die räumliche Orientierung der Sichtseite des zweiten Abdeck-Teils 13 nicht erhalten bleibt, oder auch eine Klappenlösungen, die mit einer Schiebelösung vorteilhaft kombiniert sind, um beispielsweise das Freigangsvolumen des Ladesteckers 12 noch weiter zu erhöhen (nicht zeichnerisch dargestellt).
Statt der Anordnung der Abdeck-Teile 13, 15 in Fahrzeugquerrichtung (Y-Richtung) sind ferner auch in Fahrzeughochrichtung (Z-Richtung) gesehen übereinander angeordnete Abdeck-Teile 13, 15, von denen zumindest ein Abdeck-Teil 13 im Sinne der Erfindung relativ zu den anderen Abdeck-Teilen 15 verstellbar ausgebildet ist, durch die Erfindung mit erfasst (nicht zeichnerisch dargestellt).

### Bezugszeichenliste

- 1: Frontend
- 2: Fahrzeug
- 3: Stoßfänger
- 4: Kühlerschutz
- 5: Lamellen
- 6: Emblem
- 6a: Emblemhalter
- 7: Scheinwerfer
- 8: Kotflügel
- 9: Fahrgastzelle
- 10: Frontdeckel
- 11: Ladesteckdose
- 12: Ladestecker
- 13: Abdeck-Teil
- 14: Träger-Teil
- 15: Abdeck-Teil
- 16: Trennfuge
- 17: Trennfuge
- 18: Trennfuge
- 19: erste Führungsschiene
- 20: zweite Führungsschiene
- 21: Rollenführung
- 22: Fahrtrichtungspfeil
- 23: Rippe
- 24: Viergelenkscharnier
- 24a: Gelenkarm

## Patentansprüche

1. Kühlerschutz (4) für ein Fahrzeug (2), insbesondere Kraftfahrzeug, welcher am Frontend
(1) des Fahrzeugs (2) angeordnet ist und ein oder mehrere im Motorraum des Fahrzeugs
(2) angeordnete Aggregate und/oder Einrichtungen abdeckt, wobei der Kühlerschutz (4) mehrteilig ausgebildet ist und bei Vermeidung einer Öffnung im sichtbaren Bereich desselben zumindest ein Teil (13) des Kühlerschutzes (4) relativ zu dem/den anderen Teil/en (14, 15) durch Verschwenken verstellbar ausgebildet ist, wodurch der Zugang zu zumindest einem der besagten Aggregate und/oder Einrichtungen ermöglicht ist, **dadurch gekennzeichnet, dass** das zumindest eine verschwenkbare Teil (13) mittels eines Viergelenkscharniers (24), das derart ausgebildet ist, dass eine Parallelogrammführung des verschwenkbaren Teils 13 realisiert ist, von einer Ebene,
die der ersten Betriebsstellung oder einer Geschlossenstellung des verschwenkbaren Teils (13) entspricht, in eine zu derselben parallele oder nahezu parallele Ebene, die einer zweiten Betriebsstellung oder einer Offenstellung des verschwenkbaren Teils (13) entspricht, überführbar ist, wobei eine Sichtseite des verschwenkbaren Teils (13) im Wesentlichen ihre Orientierung zu einem Betrachter beibehält.

2. Kühlerschutz (4) nach Anspruch 1, **dadurch gekennzeichnet, dass** der Kühlerschutz (4) ein Träger-Teil (14) aufweist, welches zumindest ein ortsfest am Träger-Teil (14) angeordnetes erstes Abdeck-Teil (15) und zumindest ein relativ zu demselben verstellbares zweites Abdeck-Teil (13) trägt.

3. Kühlerschutz (4) nach Anspruch 2, **dadurch gekennzeichnet, dass** die Abdeck-Teile (13, 15) nach Art eines Gitters bzw. Kühlerschutzgitters eine oder mehrere Lamellen (5) aufweisen.

4. Kühlerschutz (4) nach Anspruch 2 oder 3, **dadurch gekennzeichnet, dass** die Abdeck-Teile (13, 15) in Fahrzeugquerrichtung gesehen hintereinander oder in Fahrzeughochrichtung gesehen übereinander angeordnet sind.

5. Kühlerschutz (4) nach einem der Ansprüche 2 bis 4, **dadurch gekennzeichnet, dass** das zumindest eine verstellbare zweite Abdeck-Teil (13) in einer ersten Betriebsstellung mit dem zumindest einen ortsfest am Träger-Teil (14) angeordneten ersten Abdeck-Teil (15) eine fluchtende Sichtseite des Kühlerschutzes (4) ausbildet.

6. Kühlerschutz (4) nach einem der Ansprüche 2 bis 5, **dadurch gekennzeichnet, dass** das zumindest eine verstellbare zweite Abdeck-Teil (13) wenigstens anteilmäßig eine Trennfuge (16, 17, 18) zu einem oder mehreren benachbarten Bauteilen (3, 7, 10, 15) des Fahrzeugs (2) ausbildet.

7. Kühlerschutz (4) nach einem der Ansprüche 2 bis 6, **dadurch gekennzeichnet, dass** das zumindest eine verstellbare zweite Abdeck-Teil (13) in einem Bereich des Kühlerschutzes (4) angeordnet ist, der eine motorraumseitig angeordnete Medienanschlusseinrichtung, insbesondere eine Ladesteckdose (11) zur Speisung eines elektrischen Speichers mit elektrischem Strom, abdeckt.

8. Fahrzeug (2), insbesondere Kraftfahrzeug, mit einem Kühlerschutz (4) nach einem der Ansprüche 1 bis 7.

## Claims

1. Radiator guard (4) for a vehicle (2), in particular motor vehicle, which radiator guard is arranged at the front end (1) of the vehicle (2) and covers one or more units and/or devices arranged in the engine compartment of the vehicle (2), wherein the radiator guard (4) is of multipart design and, with an opening being avoided in the visible region thereof, at least a part (13) of the radiator guard (4) is designed to be adjustable relative to the other part/parts (14, 15) by pivoting, as a result of which access to at least one of said units and/or devices is made possible, **characterized in that** the at least one pivotable part (13) is transferable by means of a four-bar linkage hinge (24), which is designed in such a manner that a parallelogram-type guidance of the pivotable part (13) is realised, from a plane which corresponds to the first operating position or a closed position of the pivotable part (13) into a plane which is parallel or virtually parallel to said plane and corresponds to a second operating position or to an open position of the pivotable part (13), wherein a visible side of the pivotable part (13) substantially maintains its orientation with respect to an observer.

2. Radiator guard (4) according to Claim 1, **characterized in that** the radiator guard (4) has a support part (14) which bears at least one first covering part (15) arranged in a positionally fixed manner on the support part (14) and at least one second covering part (13) which is adjustable relative to said first covering part.

3. Radiator guard (4) according to Claim 2, **characterized in that** the covering parts (13, 15) have one or more fins (5) in the manner of a lattice or radiator guard lattice.

4. Radiator guard (4) according to Claim 2 or 3, **characterized in that** the covering part (13, 15) are arranged one behind another, as seen in the transverse direction of the vehicle, or one above the other, as seen in the vertical direction of the vehicle.

5. Radiator guard (4) according to one of Claims 2 to 4, **characterized in that**, in a first operating position, the at least one adjustable second covering part (13) forms an aligning visible side of the radiator guard (4) with the first covering part (15) which is arranged in a positionally fixed manner on the support part (14).

6. Radiator guard (4) according to one of Claims 2 to 5, **characterized in that** the at least one adjustable second covering part (13) at least proportionally forms a separating gap (16, 17, 18) from one or more adjacent components (3, 7, 10, 15) of the vehicle (2).

7. Radiator guard (4) according to one of Claims 2 to 6, **characterized in that** the at least one adjustable second covering part (13) is arranged in a region of the radiator guard (4) that covers a media connection device arranged in the engine compartment, in particular a charging socket (11) for feeding an electric accumulator with electrical power.

8. Vehicle (2), in particular motor vehicle, with a radiator guard (4) according to one of Claims 1 to 7.

## Revendications

1. Cache-radiateur (4) pour un véhicule (2), en particulier un véhicule automobile, qui est disposé à l'extrémité avant (1) du véhicule (2) et qui recouvre un ou plusieurs groupes et/ou dispositifs disposés dans le compartiment moteur du véhicule (2), le cache-radiateur (4) étant réalisé en plusieurs parties et, en évitant de créer une ouverture dans la région visible de celui-ci, au moins une partie (13) du cache-radiateur (4) étant réalisée de manière déplaçable par pivotement par rapport à l'autre partie/aux autres parties (14, 15), de sorte que l'accès à au moins l'un desdits groupes et/ou dispositifs soit possible, **caractérisé en ce que** l'au moins une partie pivotante (13) peut être transférée, au moyen d'une charnière à quadrilatère articulé (24) qui est réalisée de telle sorte qu'un guide à parallélogramme de la partie pivotante (13) soit produit, depuis un plan qui correspond à la première position fonctionnelle ou à une position fermée de la partie pivotante (13), dans un plan parallèle ou pratiquement parallèle à celui-ci, qui correspond à une deuxième position fonctionnelle ou à une position ouverte de la partie pivotante (13), un côté visible de la partie pivotante (13) conservant essentiellement son orientation par rapport à un observateur.

2. Cache-radiateur (4) selon la revendication 1, **caractérisé en ce que** le cache-radiateur (4) présente une partie de support (14) qui porte au moins une première partie de recouvrement (15) disposée fixement sur la partie de support (14) et au moins une deuxième partie de recouvrement (13) déplaçable par rapport à celle-ci.

3. Cache-radiateur (4) selon la revendication 2, **caractérisé en ce que** les parties de recouvrement (13, 15) présentent une ou plusieurs lamelles (5) à la manière d'une grille ou d'une grille de cache-radiateur.

4. Cache-radiateur (4) selon la revendication 2 ou 3, **caractérisé en ce que** les parties de recouvrement (13, 15), vu dans la direction transversale du véhicule, sont disposées les unes derrière les autres, ou vu dans la direction verticale du véhicule, les unes au-dessus des autres.

5. Cache-radiateur (4) selon l'une quelconque des revendications 2 à 4, **caractérisé en ce que** l'au moins une deuxième partie de recouvrement déplaçable (13) constitue, dans une première position fonctionnelle avec l'au moins une première partie de recouvrement (15) disposée fixement sur la partie de support (14), un côté visible en affleurement du cache-radiateur (4).

6. Cache-radiateur (4) selon l'une quelconque des revendications 2 à 5, **caractérisé en ce que** l'au moins une deuxième partie de recouvrement déplaçable (13) constitue au moins en partie un joint de séparation (16, 17, 18) avec un ou plusieurs composants adjacents (3, 7, 10, 15) du véhicule (2).

7. Cache-radiateur (4) selon l'une quelconque des revendications 2 à 6, **caractérisé en ce que** l'au moins une deuxième partie de recouvrement déplaçable (13) est disposée dans une région du cache-radiateur (4) qui recouvre un dispositif de raccordement de fluide disposé du côté du compartiment moteur, en particulier une prise de charge (11) pour l'alimentation en courant électrique d'un accumulateur électrique.

8. Véhicule (2), en particulier véhicule automobile, comprenant un cache-radiateur (4) selon l'une quelconque des revendications 1 à 7.
